# EUROPEAN PATENT APPLICATION

(11) **EP 1 307 059 A1**
(43) Date of publication of application: **02.05.2003**
(21) Application number: 01402802.1
(22) Date of filing: 29.10.2001
(51) Int. Cl.: H04Q 7/22

(54) **Method for fast message exchange in a radio communication system**

(71) Applicant: ALCATEL, 75008 Paris (FR)
(72) Inventor: Poza Jimenez, Manuel, 28046 Madrid (ES)
(74) Representative: Lamoureux, Bernard

(57) **Abstract**

Fast message exchange method for a radio communication system that includes a plurality of remote units located inside the coverage area of a base station, comprising the steps of receiving at the base station an access request (AR) sent from a remote unit, transmitting from the base station to the remote unit a first identify time slot (X) unused inside the downlink portion of a frame, and sending from the remote unit to the base station a first setup message (msgl) inside the first identify time slot (X). A system for carrying out the method comprises suitable means for performing the above steps. The invention is useful for allocating an available time slot on downlink as time slot on uplink for transmission of data traffics.

## Description

### OBJECT OF THE INVENTION

The present invention relates to a fast message exchange technique for a radio communication system. More particularly, the present invention relates to TDD (Time Division Duplex) radio communication systems that involve allocating available time slot on downlink as time slot on uplink for transmission of some data traffics.

### STATE OF THE ART

In TDD systems a radio band is divided into multiple time slots. Logical channels are transmitted in the physical time slots of the radio interface of the communication systems based on TDD. The time slots are clustered in frames. Each frame is divided in two parts, one for downlink transmission and the other for uplink transmission.

The fact of dividing the time interval between the two transmission directions means that transmission in a given direction cannot be carried out in any moment, but only in the corresponding part of the frame. As a consequence, a TDD system introduces a certain delay in the message exchange between a base station and a remote unit, terminal RT. On the other hand, the TDD mode is preferable for offering asymmetric data services (connections to Internet, on request video service, etc.) where the information volume transferred is much greater in one direction than in the other. In fact, the frame may be organised, so that the distribution of slots between the uplink and downlink is not symmetrical.

Although the ideal would be to dynamically modify the distribution of slots between the uplink and downlink, according to the immediate needs of subscribers, in practice, due to the technical complexity of this dynamic exchange, the frontier between both slot groups should not be displaced very often or even will remain fixed.

For this reason, given that the information volume transmitted from the base station to the terminal RT is normally much greater, a markedly asymmetric frame will be defined with a greater number of slots allocated to the downlink than the uplink. Due to the burst nature of many asymmetric traffics (web traffic, for instance), downlink slots could be idle during considerable lapses of time. However, uplink transmissions cannot benefit from this situation and must wait for the uplink subframe, which means delay. This delay is especially significant in transmissions of a short duration where call setup occupies an important percentage of the total communication.

It is already known that call setup uses several frames, where an exchange of messages between the terminal RT or subscriber's station and the base station is produced. In the case of transmission of little information, the setup time may have a strong impact on the average delay of the packets, which will be worsened by the presence of empty lapses in the frames exchanged during the call setup.

Methods have already been proposed for the reduction of delays in call setup and message exchange in radio communication systems. One example of them is EP-A-0720405, of ATT, which describes a method for the dynamic allocation of available channels according to demand. Each frame contains a first set of slots allocated for the uplink transmission, a second set of slots allocated for the downlink transmission and a third set of channel windows, not allocated to any of the two directions. The third set of slots is therefore allocated dynamically between uplink and downlink users according to users' demand.

Unfortunately, this publication has a drawback as it does not discuss dynamic allocation of radio capacity, time slots assigned to one transmission direction, when there are time slots that are unused.

The purpose of this invention is to provide a method that reduces the delay during message exchange in TDD systems by means of better use of the frame, hence achieving a more efficient use of the radio capacity of the communication systems.

### CHARACTERISATION OF THE INVENTION

As already has been mentioned, the purpose of this invention is to provide a fast message exchange method for TDD systems by which its radio capacity can be better exploited. This purpose is accomplished by providing a transmission direction inversion mechanism in certain unused time slots of the downlink portion of a frame, permitting them to be used and therefore reduce message exchange time; these are the frames used in this setup process.

Hence, the technical problems mentioned above are solved by the invention by constituting a fast message exchange method for radio communication system that includes a plurality of remote units located inside the coverage area of a base station, such that the process for setting up a radio channel for a communication includes the following steps: receiving at the base station an access request sent from a remote unit, transmitting from the base station to the remote unit a first identify time slot unused inside the downlink portion of a frame, and sending from the remote unit to the base station a first setup message inside the first identify time slot.

An advantage arising from the use of the above mentioned process is that the frontier between downlink portion and uplink portion is static, and this fact represents a major advantage since it is not necessary to use a great capacity of computation means for performing the use of a time slot of the downlink portion as uplink in the inverted transmission direction.

The base station must only allocate to the remote unit with which it is developing the process for setting up a radio channel a time slot unused in the downlink portion that said remote unit can use as uplink to shorten the time, in a frame, which is spent during a communication setup.

### BRIEF DESCRIPTION OF THE DRAWINGS

The characteristics and advantages of the invention will become more clear with a detailed description thereof, taken together with the attached drawings, in which:
Figure 1 is a schematic representation of an example of message exchange that, in general, is performed by a terminal RT or subscriber's station with the base station on accessing a radio system.
Figure 2 is a diagram showing a conventional asymmetric distribution of slots between the uplink portion and the downlink portion of the frame of a TDD system.
Figure 3 shows a frame sequence example for the message exchange in an access procedure to a radio system according to the method of this invention.

### DESCRIPTION OF THE INVENTION

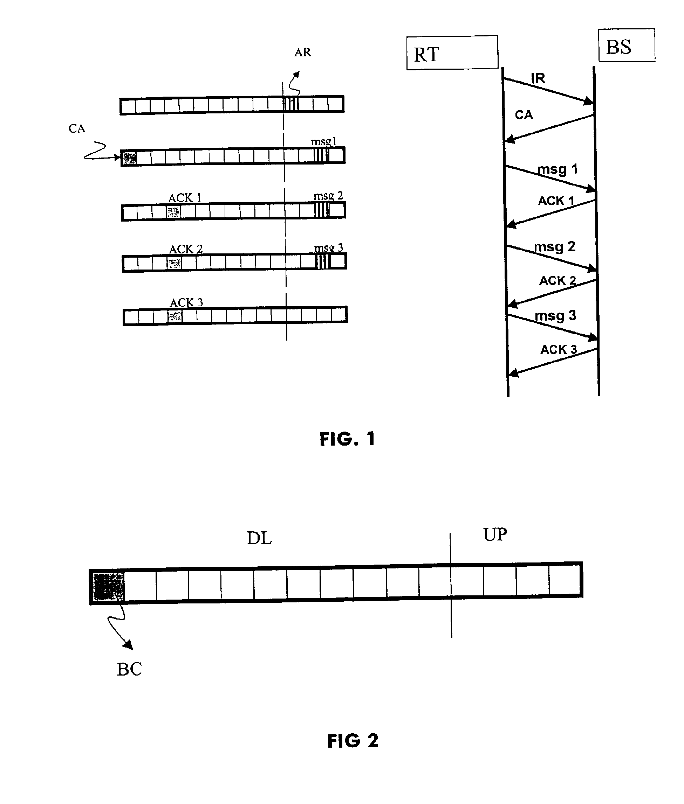

Referring to figure 1, an example of message exchange is shown sequentially which is produced between a base station BS and a remote unit RT, terminal, which is located inside the coverage area of the base station BS, to setup a communication in which three messages are transmitted.

The terminal RT sends a first initial request IR message for access to a TDD communication system, to which the base station BS replies allocating a determined radio channel CA.

Once the radio channel CA has been setup, the terminal RT starts to transmit the data comprising the communication, grouped in msg1, msg2 and msg3 packets. To transmit each successive msgN packet, the terminal RT has to receive confirmation of the arrival of the previous packet, which is transmitted to the base station BS in the form of an acknowledgement or validation message ACK1, ACK2 and ACK3 (acknowledgement).

According to figure 2, a frame of the TDD radio communication system is shown. The frame has a conventional asymmetric slot distribution, for example, the uplink portion UP has less time slots than the downlink portion DL of the frame.

As has already been explained, most of the slots have been allocated to the downlink portion DL of the frame. It is clear that this inequality in the distribution of slots between both portions of the frame will lead, under normal transmission circumstances, to the existence, during an important part of the time, of unused slots in the downlink portion DL.

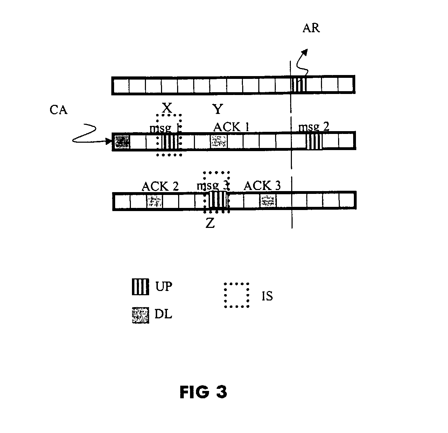

The method proposed by the invention is shown in figure 3. With the purpose of achieving a faster access of the terminal RT to the system, that mean call setup, and greater flexibility in the transmission of small amounts of data in the uplinks, according to this invention, the base station BS, in the light of the forecasts of the immediate use of the slots in the communication, determines a downlink slot which will be unoccupied for a specified time period and allocates it to the transmission of uplink data related to the call setup process without disturbing the connections in progress.

In this way, when an access request AR is received from the terminal RT, the base station BS activates means to determine which downlink slot is available to be occupied by a message, related to call setup process, sent to the base station BS from the terminal RT.

This information is included in the initial message of response to the access request AR that the base station BS sends to the terminal RT in the corresponding time slot downlink, i.e. if the access request AR is received in the first time slot uplink, the base station BS enters the information corresponding to a time slot downlink available in the first time slot of the downlink portion DL.

The base station BS points to the terminal RT in said time slot downlink that it awaits the following message, the first message msg1, concerning the call setup in the time slot X of the downlink portion DL. Thus, the time slot X of the downlink portion DL will be used by the terminal RT in the inverted time slot uplink transmission direction.

Therefore, the terminal RT has to have time to process the information and be able to act, i.e. to enter the following message into the inverted time slot, a separation, i.e. time, must exist between the first time slot and the inverted time slot, which will be used by the terminal RT in the uplink transmission direction.

The time among allocated time slots will be a function of the distance from the terminal RT to the base station BS, the frame length and time, and the frame duration (1 msg, 2msg, etc.).

Once the base station BS has received from the terminal RT the following message corresponding to the call setup, communicated in the time slot X, the base station BS answers the message with an acknowledgement, the acknowledgement message ACK1, which is obviously inserted in a time slot Y of the downlink portion DL.

However, it is noted that there must be between time slots X and Y a minimum time corresponding to a time slot, since the base station BS, once it receives the time slot X, analyses the information and looks for a time slot available for answering the message received from the terminal RT.

In the answer that the base station BS sends to the terminal RT, it points to the latter the time slot where it expects to receive the following message, the message msg2, concerning the call setup. Said time slot may correspond to a time slot of the downlink portion DL or uplink portion UP.

Accordingly, the process is repeated in a way similar to that described above until the call setup is completed. Subsequently, the call proceeds in accordance with the TDD technology or the like, known already in the state of the art.

That is, the base station BS sends a new acknowledgement message ACK2, corresponding to msg2, which includes the time slot Z where it expects to receive the following message, the message msg3, corresponding to the call setup, which can correspond to the downlink portion DL or the uplink UP portion, on the basis of whether or not there is an available time slot in the downlink portion DL. Subsequently, the base station BS sends its corresponding acknowledgement message ACK3 to the terminal RT. A similar development occurs in a time slot corresponding to the downlink portion DL or uplink portion UP, on the basis of whether or not there is an available unused time slot in the downlink portion DL.

With the latter, the connection setup time is significantly reduced, as it is possible to exchange several call setup messages between the base station BS and the terminal RT in the downlink portion DL of a frame.

These reception slots initially destined to the downlink portion DL, but which the system uses for the reception of messages msg1 and msg3, receive the name of inverse slots. The result of their use is that, in the example shown in figure 3, the system has reduced the time used in the exchange of the messages corresponding to the call setup; on the basis of the number of time slots available in the downlink portion DL the call setup can be accomplished in two frames, it would have taken four frames without reversing the time slots, shown in figure 1.

Generally, if the amount of data to be transmitted is small, this slot allocation may be extended until the end of the transmission. In this way, a more efficient use of the communication channel is obtained.

As a result, this procedure is especially suitable in systems with asymmetric distribution of radio resources and burst data traffic, in which the radio resources remain unused most of the time.

Although the method has been shown and described according to this invention in relation to a specific execution thereof, it is understood that the invention is not limited to said specific description and that it is possible to make different changes and modifications without deviating from the scope of the invention as established in the attached claims.

## Claims

1. **Fast message exchange method for a radio communication system** including a plurality of remote units (RT) located inside the coverage area of a base station (BS); **characterised in that** the method includes the following steps: a) receiving at the base station (BS) an access request (AR) sent from a remote unit (RT), b) transmitting from the base station (BS) to the remote unit (RT) a first identify time slot unused inside the downlink portion (DL) of a frame, and c) sending from the remote unit (RT) to the base station (BS) a first setup message (msgl) inside the first identify time slot (X).

2. **Fast message exchange method** according to claim 1; **characterised in that** the step of transmitting from the base station (BS) to the remote unit (RT) further includes the step of transmitting a second identify time slot unused (Y) inside the downlink portion (DL) of the frame.

3. **Fast message exchange method** according to claim 2; **characterised in that** the step of sending from the remote unit (RT) to the base station (BS) further includes the step of sending a second setup message (msg2) inside the second identify time slot(Y).

4. **System for fast message exchanging for a radio communication system** including a plurality of remote units (RT) located inside the coverage area of a base station (BS); **characterised in that** the system is adapted to receive at the base station (BS) an access request (AR) sent from a remote unit (RT), to transmit from the base station (BS) to the remote unit (RT) a first identify time slot (X) unused inside the downlink portion (DL) of a frame, and to send from the remote unit (RT) to the base station (BS) a first setup message (msgl) inside the first identify time slot(X).

5. **System for fast message exchanging** according to claim 4; **characterised in that** the system is adapted to further transmit from the base station (BS) to the remote unit (RT) a second identify time slot (Y) unused inside the downlink portion (DL) of the frame.

6. **System for fast message exchanging** according to claim 5; **characterised in that** the system is adapted to further send from the remote unit (RT) to the base station (BS) a second setup message (msg2) inside the second identify time slot (Y).

7. **Base station** according to claim 5; **characterised in that** the base station (BS) is adapted to transmit to the remote unit (RT) at least a first identify time slot (X) unused inside the downlink portion (DL) of the frame.

8. **Remote unit** according to claim 6; **characterised in that** the remote unit (RT) is adapted to transmit to the base station (BS) at least a first setup message (msgl) inside the first identify time slot (X).
